Europäisches Patentamt

(19) European Patent Office

Office européen des brevets

(11) Numéro de publication : **0 034 551**
**B1**

(12) **FASCICULE DE BREVET EUROPÉEN**

(45) Date de publication du fascicule du brevet :
23.05.84

(51) Int. Cl.³ : **B 65 D 77/20, B 65 B 7/16**

(21) Numéro de dépôt : **81420013.5**

(22) Date de dépôt : **12.02.81**

(54) **Procédé de fermeture étanche de récipients par opercules minces.**

(30) Priorité : 14.02.80 FR 8003637

(43) Date de publication de la demande :
26.08.81 Bulletin 81/34

(45) Mention de la délivrance du brevet :
23.05.84 Bulletin 84/21

(84) Etats contractants désignés :
BE CH DE GB IT LI NL

(56) Documents cités :
US-A- 3 066 848
MODERN MATERIALS HANDLING, vol. 10 avril 1955,
no. 4 "Adhesives as a method of closure" page 90

(73) Titulaire : **SCAL SOCIETE DE CONDITIONNEMENTS
EN ALUMINIUM**
**47, rue de Monceau**
**F-75008 Paris (FR)**

(72) Inventeur : **Richard, Serge**
**5, rue Dubois Carré**
**F-78910 Orgerus (FR)**

(74) Mandataire : **Vanlaer, Marcel et al**
**PECHINEY 28, rue de Bonnel**
**F-69433 Lyon Cedex 3 (FR)**

## Description

La fermeture de récipients par des opercules minces collés sur l'embouchure de ces récipients est un procédé très répandu et qui se développe encore quotidiennement. Il est utilisé aussi bien pour des récipients rigides, tels que bouteilles et pots en verre, que pour des récipients en matériau plus souple tels que les récipients en matière plastique et composite. Ce mode de fermeture a l'avantage d'être à la fois économique et étanche.

Lorsque le récipient a une paroi très mince, il n'est pas possible de coller l'opercule sur la tranche de l'embouchure. On réalise alors à la partie supérieure de l'embouchure un évasement en forme de collet sensiblement plan pour donner une surface de collage suffisante. A l'heure actuelle, de nombreux pots de yaourt en plastique se présentent sous cette forme.

Les opercules minces sont généralement enduits sur une face d'une couche de produit thermocollant, puis appliqués par une tête de scellage chaude souvent appelée « électrode », sur l'embouchure.

Ce mode de fermeture dit « à plat » à l'inconvénient que, si par accident un corps étranger solide ou liquide est tombé sur la face supérieure de l'embouchure, il reste emprisonné lors du scellage entre les surfaces planes en regard de l'embouchure et de l'opercule. Il entraîne un défaut d'étanchéité. Pour pallier à ces problèmes, depuis un certain temps, on pratique de préférence le scellage dit « en cordon ».

La tête de scellage est pourvue d'une nervure périphérique en relief qui applique énergiquement l'opercule le long d'une bande (ou cordon) périphérique étroite. Les corps étrangers ont ainsi toute chance d'être expulsés de part et d'autre de cette bande étroite, soumise à une forte pression.

Si le récipient est en matériau relativement souple au moins à chaud, tel qu'une matière plastique ou un composite stratifié aluminium-plastique, le scellage en cordon a également l'avantage de pallier à des défauts de planéité de la face supérieure du récipient. La nervure de la tête de scellage imprime à travers l'opercule une rainure dans la face supérieure de l'embouchure à obturer. L'opercule mince se trouvant entre la tête et l'embouchure est également déformé selon une rainure étroite qui s'applique dans celle du récipient.

Cependant, si un opercule doit assurer une fermeture étanche et économique du récipient, il doit aussi permettre une ouverture facile sans se déchirer ni obliger le consommateur à effectuer l'ouverture en plusieurs étapes, au risque de se tacher et de disperser plusieurs fractions d'opercule peu esthétiques.

On s'est efforcé de résoudre ce problème en recherchant des produits thermocollants d'adhérence suffisante, mais cependant minimale, pour permettre un décollage facile. On connaît ainsi de nombreux mélanges de produits adhésifs de propriétés variées soigneusement dosées.

Le problème de l'ouverture est encore plus difficile dans le cas du scellage en cordon que dans celui du scellage à plat. L'opercule adhère à la paroi du récipient, non seulement du fait de l'adhérence de la couche de produit thermocollant, mais aussi du fait de l'encastrement de la rainure de l'opercule dans celle du récipient. Lors de l'ouverture, le consommateur n'a pas à séparer deux surfaces planes, mais deux surfaces tourmentées. Enfin, on ne peut utiliser certains produits à faible pouvoir adhérent du fait qu'ils ont aussi une faible viscosité et qu'ils seraient eux-mêmes chassés par la forte pression qui s'exerce le long du cordon.

D'autres solutions ont été préconisées pour faciliter la séparation du récipient et de son opercule et qui sont basées sur le principe d'une limitation de la surface d'adhérence de l'opercule.

C'est ainsi que dans le document US-A-3 066 848, l'opercule étant constitué par une feuille d'un matériau thermoplastique, on le revêt, sur la face en regard du récipient suivant les lignes d'un réseau maillé, d'une laque ou d'un vernis ayant une plus grande résistance à la chaleur, c'est-à-dire qu'on réalise un réseau le long duquel il n'y a pas d'adhérence avec le récipient lors de la montée en température appliquée pour réaliser le thermocollage. De ce fait, l'opercule présente des zones collantes ponctuelles autour desquelles l'air extérieur peut facilement s'écouler vers l'intérieur du récipient. Cette technique n'offre donc aucune garantie d'étanchéité et ne peut être appliquée au conditionnement de la plupart des produits consommables.

Dans la DE-A-24 08 287, on procède au revêtement par un produit collant de la totalité de la surface d'une des faces de l'opercule, puis, on masque partiellement ce produit collant par apport d'un produit non collant... Certes, pour certains types particuliers de masques, on peut espérer obtenir l'étanchéité requise, mais cette fonction n'est pas enseignée dans cette demande de brevet. De plus, le revêtement de la totalité de la surface nécessite l'utilisation d'une quantité relativement importante de produit collant dont une partie seulement sert à l'adhérence. En outre, ce procédé est compliqué, car il nécessite deux étapes distinctes, l'une d'enduction proprement dite, l'autre d'apport d'un produit non collant.

C'est pourquoi la demanderesse gardant le principe d'une limitation de la surface d'adhérence de l'opercule propose une nouvelle solution.

Comme on ne peut limiter l'enduction de colle sur l'opercule à une mince ligne fermée correspondant au dessin de la nervure de la tête de scellage, car, dans une installation industrielle, cette ligne ne se trouvera pas toujours en concordance avec la nervure de la tête au moment du scellage, cette solution consiste à réaliser sur l'opercule, en une seule opération, une enduction de produit thermocollant uniquement selon les lignes d'un réseau maillé, les surfaces entre les lignes du réseau étant constituées par le matériau d'origine de l'opercule.

Pour être certain de l'étanchéité de l'ouverture, la distance maximale entre les surfaces enduites, c'est-à-dire la longueur des diagonales des mailles du réseau doit être inférieure à la largeur développée de la nervure de la tête de scellage et, de préférence, inférieure à la largeur de la partie frontale de la nervure.

Ainsi, la demanderesse propose un procédé d'ouverture facile des opercules minces ayant, sur ceux de l'art antérieur, l'avantage d'une garantie d'étanchéité parfaite obtenue par des moyens simples et économiques.

L'invention sera mieux comprise par la description ci-après d'un exemple particulier :

La figure 1 représente, en coupe axiale, une tête de scellage, une capsule et l'embouchure d'un récipient avant fermeture.

La figure 2 représente également en coupe les mêmes éléments au moment où la tête de scellage vient appliquer la capsule sur l'embouchure du récipient.

La figure 3 représente en vue de dessus le récipient fermé par un opercule supposé transparent et laissant apparaître le réseau de produit thermocollant appliqué sur sa face inférieure.

La figure 4 représente à plus grande échelle un détail de cette vue de dessus au niveau de la rainure formée dans l'opercule.

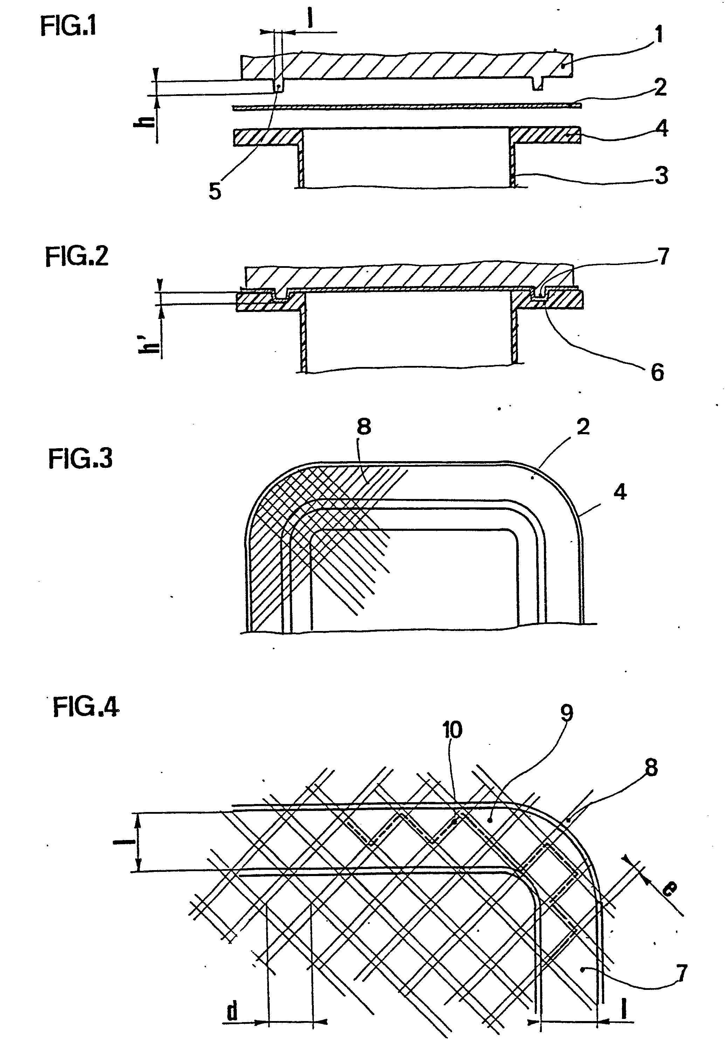

Sur la figure 1, on voit distinctement la tête de scellage chaude (1) se présentant au-dessus de l'opercule (2) mince et plat lui-même au-dessus du récipient (3) en matière plastique qui comporte un collet plat (4) permettant d'avoir une surface de scellage suffisante.

La tête de scellage (1) comporte une rainure périphérique en relief (5) de largeur (1) et de hauteur (h).

En figure 2, la tête de scellage est abaissée sur le récipient (3) en appliquant l'opercule (2) sur le collet (4).

La pression de la tête (1) sur le collet (4) a imprimé dans celui-ci une rainure (6) et embouti dans celle-ci l'opercule selon une rainure complémentaire (7) dont, après remontée de la tête, détente et refroidissement du collet (4), la largeur est (1) et la hauteur (h') peu différentes de la hauteur (h) et de la nervure (5).

Sur la figure 3, on voit les lignes du réseau à trame carrée selon lequel a été appliqué le produit thermocollant. Le détail de ce réseau est plus visible sur la figure 4. Dans le cas particulier représenté, la largeur (1) de la rainure (7) est de 1, 5 mm et sa hauteur (h') de 0,3 mm.

Le réseau de produit thermocollant est constitué de lignes (8) d'épaisseur e = 0,3 mm, se croisant à angle droit. Les surfaces carrées non enduites (9) sont ainsi des carrés de 1 mm de côté dont la diagonale (d) a une longueur de 1,4 mm qui est inférieure à la largeur (1) de la rainure (7).

On voit qu'au fond de la rainure (7), on peut tracer une ligne continue d'étanchéité (10) figurée ici en pointillés.

La trame du réseau de produits thermocollants est ici une trame de lignes droites également espacées et se croisant à angle droit, mais on pourrait atteindre le même résultat avec des lignes droites se croisant selon un autre angle ou encore des lignes courbes sinusoïdales, ou bien encore des lignes brisées s'entrecroisant pour former un réseau fermé.

**Revendications**

1. Procédé de fermeture étanche de récipients (3) par opercules minces (2) dont on enduit l'une des faces de produits thermocollants, caractérisé en ce que cette enduction réalisée en une seule opération se fait uniquement selon les lignes (8) d'un réseau maillé, les surfaces (9) entre les lignes (8) du réseau étant constituées par le matériau d'origine de l'opercule.

2. Procédé selon la revendication 1, caractérisé en ce que les diagonales (d) des surfaces (9) non enduites ont une longueur inférieure à la largeur (1) du fond de la rainure imprimée dans l'opercule (2) et le récipient (3).

**Claims**

1. A process for sealingly closing containers (3) by means of thin lids (2), one of the faces of which is coated with heat-sealing substances, characterised in that said coating step which is performed in a single operation is effected solely along the lines (8) of a grid configuration, the surfaces (9) between the lines (8) of the grid being formed by the original material of the lid.

2. A process according to claim 1, characterised in that the diagonals (d) of the uncoated surfaces (9) are shorter than the width (1) of the bottom of the groove impressed in the lid (2) and the container (3).

**Ansprüche**

1. Verfahren zum dichten Verschließen von Behältern (3) mittels dünner Deckel, deren eine Seite mit Thermoklebstoffen bestrichen ist, dadurch gekennzeichnet, daß diese Bestreichung in einem einzigen Vorgang ausschließlich in Form von Linien (8) eines Maschennetzes ausgeführt wird, wobei die Flächen (9) zwischen den Linien (8) des Netzes von dem ursprünglichen Deckelmaterial gebildet werden.

2. Verfahren nach Anspruch 1, dadurch gekennzeichnet, daß die Diagonalen (d) der nichtbeschichteten Flächen kürzer sind als die Breite (1) des Bodens einer in den Deckel (2) und in den Behälter (3) eingeprägten Nut.

0 034 551

FIG.1

FIG.2

FIG.3

FIG.4